# EUROPEAN PATENT SPECIFICATION

(11) **EP 3 263 942 B1**
(45) Date of publication and mention of the grant of the patent: **06.03.2019**
(21) Application number: 16177351.0
(22) Date of filing: 30.06.2016
(51) Int. Cl.: F16D 65/12

(54) **BRAKE DISC BELL**
BREMSSCHEIBENGLOCKE
CLOCHE DE DISQUE DE FREIN

(43) Date of publication of application: 03.01.2018
(73) Proprietor: Brembo SGL Carbon Ceramic Brakes GmbH, 86405 Meitingen (DE)
(72) Inventor: Scheppach, Jürgen, 89331 Burgau (DE); Cretu, Ionel-Michael, 86356 Neusäß (DE); Reulein, Harald, 86750 Megesheim (DE); Jähne, Thomas, 86161 Augsburg (DE)

(56) References cited:
- EP-A1- 0 474 877
- EP-A1- 0 987 462
- DE-A1-102011 010 866
- US-A1- 2004 050 632

## Description

The present invention relates to a brake disc bell suitable to be connected with a brake disc ring for the manufacture of a brake disc assembly.

Brake disc assemblies formed of its main components of a brake disc ring and a brake disc bell are widely known, in particular, if the materials of the respective components are different to each other. This is, for example, the case with carbon ceramic brake discs, in particular carbon fiber reinforced ceramic brake discs. A carbon ceramic brake disc typically comprises a carbon ceramic brake disc ring which is connected to a brake disc bell of metal.

The brake torque in such brake disc assemblies is transferred from the brake disc ring, where it originates, to the brake disc bell. Therefore, the connection between those two components in brake disc assembly is critical. Typically, the brake disc bell is mounted on a brake disc ring by means of a series of bolts or screws. In use of a brake disc, high loads and forces act on the screws. These forces do not only act in axial direction, in which the screws are supposed to keep bell and ring together, but also in radial direction. High shear stress and contact pressure occur during the brake process. In order to strengthen the screws, casings or bushings, as described in EP 2886902 A1, are often used.

However, the said high shear stress and contact pressure also affect on brake disc bell, specifically at the position where the connecting means, like the screws, are placed at the bell.

The object of the present invention is, therefore, to provide a technical design of a brake disc bell in which the high shear stress and contact pressure have less impact on the stability and durability of a brake disc bell and the connecting elements.

The solution of this object provided by the present invention is a brake disc bell suitable to be connected with a brake disc ring for the manufacture of a brake disc assembly, the bell having annular shape around an axis of rotation when in use, the bell comprising a plurality of openings envisaged for inserting connecting elements to connect the brake disc bell with the brake disc ring for the transfer of a brake torque from the brake disc ring via the connecting elements to the brake disc bell, wherein the openings extending from a first surface on the bell in axial direction to at least a defined depth of the bell, said first surface facing the brake disc ring in an assembled state of the brake disc assembly, the openings defining a second surface within the openings, characterized in that at least a part of the second surface within the openings has a convex contour in a cross section of the respective opening, wherein the cross-sectional area of the cross section is perpendicular to a radius of the brake disc bell going through the center line of the respective opening and wherein the cross-sectional area is at the position of the center line of the inserted connecting element in an assembled state of the brake disc assembly.
Figure 1 is a schematic view of a brake disc bell. Therein, various different kinds of possible inventive openings are shown.
Figure 2 is a schematic cross-sectional view through a connecting element of a brake disc assembly with a brake disc bell according to an embodiment of the present invention.

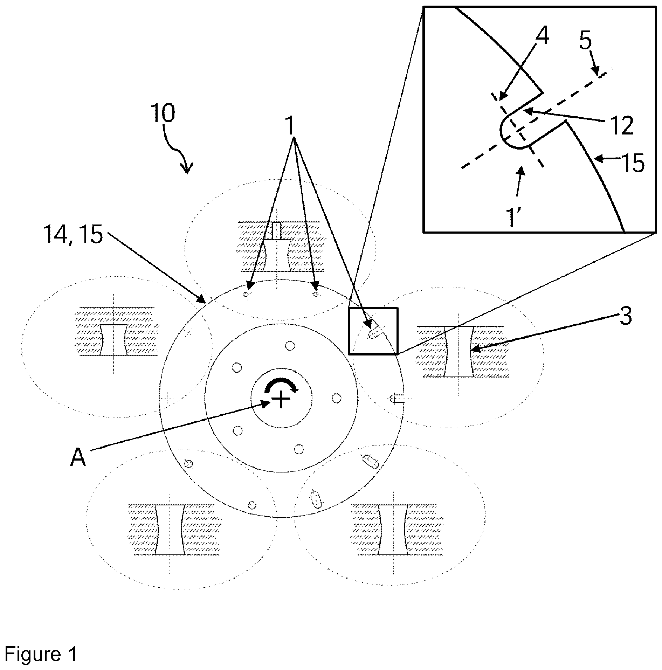

As an opening according to the present invention it can be understood any hole of any form in a surface or a groove on the outer circumferential edge of the brake disc bell. Forms of holes are, for example, but not limited to bores, elongated holes and blind holes (see reference number 1 in figure 1). The opening (1) of the present invention, whether it is a hole or a groove (1'), starts from a surface (11) of the bell (10) and lead in the direction parallel to the axis of rotation (A) of the brake disc bell (10). The opening (1) is furthermore not limited to a certain depth or length, that is, it does not need to pass all the way through the thickness (13) of the bell.

The term "the brake disc bell" is often referred to only as "the bell" in the present application. These two terms are synonyms and no difference should be construed between them. The same applies to the terms "the brake disc ring" and "the ring".

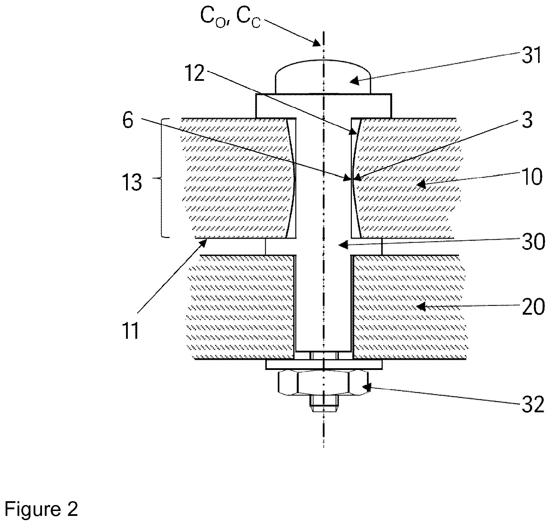

The connecting element (30) according to the present invention can be any means for the fixation of the bell (10) onto the ring (20), for example, a bolt or a screw (31). Also comprised by the connection element (30) is, if applicable, a casing or a bushing (30), as for example described in EP 2886902 A1. In the preferred embodiment shown in figure 2, the connecting means comprise a screw (31) a nut (32) and a bushing (30) surrounding the screw (31). The reason why in figure 2 only the bushing is labeled with the general reference number 30 for the connecting element, is because the bushing is the part being in contact with the bell (10). A part of the connecting element (30) in an assembled state of the brake disc assembly is located in the opening (1) of the bell (10) according to the present invention.

The inventive convex contour (3) of the cross-sectional shape of the surface (12) within the opening (1) is decisive for a lowered load peak or force peak acting on the part of the surface(12) of the bell being in contact with the connecting element. This leads to higher stability, higher durability and higher fatigue strength of the break disc bell (10) and the connecting elements (30). Not willing to be bound by theory, it is assumed that the inventive convex contour (3) leads to a local separation of the shear stress and the contact pressure. Caused by the convex contour (3), the location of the contact pressure is moved away from the edge of the opening (1) to the inside of the bell (10). Other performance requirements of an assembled brake disc are not negatively affected by the invention. In particular, the brake performance of carbon-ceramic brake discs, which are designed for heavy and powerful vehicles or even for aircrafts, is very good when a bell (10) according to the present invention is used.

According to a preferred embodiment of the present invention the convex contour (3) has a curvature having a radius at the point of contact (6) between the second surface (12) within the opening (1) and the connecting element (30) in the range of 10 mm to 1000 mm, preferably in the range of 40 mm to 100 mm. Within these ranges of the radius of the convexity, the advantageous effect of the present invention is particularly strong.

According to a preferred embodiment of the present invention the openings (1) comprise bores, elongated holes or grooves (1'), wherein the bell (10) comprising an outer circumferential surface area which is defined by the outer circumference (14) and the thickness (13) of the bell (10) in axial direction at the outer circumferential edge (15) of the bell, and wherein the grooves (1') are positioned at the outer circumferential surface area passing through at least a part of the thickness (13) of the bell (10) in axial direction. Preferably, however, the openings (1) comprise the grooves (1').

The depth of the openings (1) is not particularly limited. In a preferred embodiment, the openings (1) extend through the complete thickness (13) of the bell (10) in axial direction. It is, however, also possible that the openings (1) end at a certain depth of the bell (10), as shown in some of the exemplary openings (1) in figure 1. Most preferred are grooves (1') passing all the way through the thickness (13) of the bell (10) in axial direction.

It is not mandatory that the convex contour (3) of the openings (1) spans over the complete depth of the openings (1). The inventive contour (3) must at least be present at the point or line (6) of the second surface (12), which is the inner surface of the opening, at which the highest loads occur during a brake process. Most preferably, however, the convex contour (3) spans over the complete depth of the openings (1).

## Claims

1. A brake disc bell (10) suitable to be connected with a brake disc ring (20) for the manufacture of a brake disc assembly, the bell (10) having annular shape around an axis of rotation (A) when in use,
the bell (10) comprising a plurality of openings (1) envisaged for inserting connecting elements (30) to connect the brake disc bell (10) with the brake disc ring (20) for the transfer of a brake torque from the brake disc ring (20) via the connecting elements (30) to the brake disc bell (10),
wherein the openings (1) extending from a first surface (11) on the bell (10) in axial direction to at least a defined depth of the bell (10), said first surface (11) facing the brake disc ring (20) in an assembled state of the brake disc assembly,
the openings (1) defining a second surface (12) within the openings (1), **characterized in that** at least a part of the second surface (12) within the openings (1) has a convex contour (3) in a cross section of the respective opening (1), wherein the cross-sectional area (4) of the cross section is perpendicular to a radius (5) of the brake disc bell (1) going through the center line (C_{O}) of the respective opening (1) and wherein the cross-sectional area (4) is at the position of the center line (C_{C}) of the inserted connecting element (30) in an assembled state of the brake disc assembly.

2. The brake disc bell (10) according to claim 1, **characterized in that** the convex contour (3) has a curvature having a radius at the point of contact (6) between the second surface (12) within the opening (1) and the connecting element (30) in the range of 10 mm to 1000 mm, preferably in the range of 40 mm to 100 mm.

3. The brake disc bell (10) according to claim 1 or 2, **characterized in that** the openings (1) comprise bores, elongated holes or grooves (1'),
wherein the bell (10) comprising an outer circumferential surface area which is defined by the outer circumference (14) and the thickness (13) of the bell (10) in axial direction at the outer circumferential edge (15) of the bell,
and wherein the grooves (1') are positioned at the outer circumferential surface area passing through at least a part of the thickness (13) of the bell (10) in axial direction.

4. The brake disc bell (10) according to claim 3, **characterized in that** the openings (1) comprise the grooves (1').

5. The brake disc bell (10) according to claim 4, **characterized in that** the grooves (1') passing all the way through the thickness (13) of the bell (10) in axial direction.

6. The brake disc bell (10) according to any one of the preceding claims, **characterized in that** the convex contour (3) spans over the complete depth of the openings (1).

## Patentansprüche

1. Bremsscheibenglocke (10), die geeignet ist, zum Herstellen einer Bremsscheibenanordnung mit einem Bremsscheibenring (20) verbunden zu werden, wobei die Glocke (10) in Verwendung eine ringförmige Form um eine Drehachse (A) herum aufweist, wobei die Glocke (10) mehrere Öffnungen (1) umfasst, die zum Einführen von Verbindungselementen (30) vorgesehen sind, um die Bremsscheibenglocke (10) mit dem Bremsscheibenring (20) für die Übertragung eines Bremsmoments von dem Bremsscheibenring (20) über die Verbindungselemente (30) zur Bremsscheibenglocke (10) zu verbinden,
wobei die Öffnungen (1) sich von einer ersten Oberfläche (11) auf der Glocke (10) in einer Achsenrichtung zu wenigstens einer definierten Tiefe der Glocke (10) erstrecken, wobei die erste Oberfläche (11) in einem montierten Zustand der Bremsscheibenanordnung dem Bremsscheibenring (20) zugewandt ist,
wobei die Öffnungen (1) eine zweite Oberfläche (12) in den Öffnungen (1) definieren, **dadurch gekennzeichnet, dass** wenigstens ein Teil der zweiten Oberfläche (12) in den Öffnungen (1) einen konvexen Umriss (3) in einem Querschnitt der jeweiligen Öffnung (1) aufweist, wobei der Querschnittsbereich (4) des Querschnitts senkrecht zu einem Radius (5) der Bremsscheibenglocke (1) ist, der durch die Mittellinie (C_{O}) der jeweiligen Öffnung (1) läuft, und wobei der Querschnittsbereich (4) sich an der Position der Mittellinie (C_{C}) des eingeführten Verbindungselements (30) in einem montierten Zustand der Bremsscheibenanordnung befindet.

2. Bremsscheibenglocke (10) nach Anspruch 1, **dadurch gekennzeichnet, dass** der konvexe Umriss (3) eine Krümmung mit einem Radius an dem Berührungspunkt (6) zwischen der zweiten Oberfläche (12) in der Öffnung (1) und dem Verbindungselement (30) im Bereich von 10 mm bis 1000 mm, vorzugsweise im Bereich von 40 mm bis 100 mm aufweist.

3. Bremsscheibenglocke (10) nach Anspruch 1 oder 2, **dadurch gekennzeichnet, dass** die Öffnungen (1) Bohrungen, Längslöcher oder Rillen (1') umfassen,
wobei die Glocke (10) einen Außenumfangsoberflächenbereich umfasst, der durch den Außenumfang (14) und die Dicke (13) der Glocke (10) in Achsenrichtung an der Außenumfangskante (15) der Glocke definiert ist,
und wobei die Rillen (1') am Außenumfangsoberflächenbereich, der durch wenigstens einen Teil der Dicke (13) der Glocke (10) in Achsenrichtung läuft, angeordnet sind.

4. Bremsscheibenglocke (10) nach Anspruch 3, **dadurch gekennzeichnet, dass** die Öffnungen (1) die Rillen (1') umfassen.

5. Bremsscheibenglocke (10) nach Anspruch 4, **dadurch gekennzeichnet, dass** die Rillen (1') durch die gesamte Dicke (-13) der Glocke (10) in Achsenrichtung verlaufen.

6. Bremsscheibenglocke (10) nach einem der vorhergehenden Ansprüche, **dadurch gekennzeichnet, dass** der konvexe Umriss (3) die vollständige Tiefe der Öffnungen (1) überspannt.

## Revendications

1. Cloche de disque de frein (10) appropriée pour être raccordée à un anneau de disque de frein (20) pour la fabrication d'un ensemble disque de frein, la cloche (10) ayant une forme annulaire autour d'un axe de rotation (A) lorsqu'elle est en utilisation,
la cloche (10) comprenant une pluralité d'ouvertures (1) prévues pour insérer des éléments de raccordement (30) pour raccorder la cloche de disque de frein (10) à l'anneau de disque de frein (20) pour le transfert d'un couple de freinage de l'anneau de disque de frein (20) via les éléments de raccordement (30) à la cloche de disque de frein (10),
dans laquelle les ouvertures (1) s'étendent depuis une première surface (11) sur la cloche (10) en direction axiale jusqu'à au moins une profondeur définie de la cloche (10), ladite première surface (11) étant en regard de l'anneau de disque de frein (20) dans un état assemblé de l'ensemble disque de frein,
les ouvertures (1) définissant une seconde surface (12) au sein des ouvertures (1), **caractérisée en ce qu'**au moins une partie de la seconde surface (12) au sein des ouvertures (1) a un contour convexe (3) dans une coupe de l'ouverture (1) respective, dans laquelle l'aire en coupe (4) de la coupe est perpendiculaire à un rayon (5) de la cloche de disque de frein (1) passant par la ligne centrale (C_{O}) de l'ouverture (1) respective et dans laquelle l'aire en coupe (4) est à la position de la ligne centrale (C_{C}) de l'élément de raccordement inséré (30) dans un état assemblé de l'ensemble disque de frein.

2. Cloche de disque de frein (10) selon la revendication 1, **caractérisée en ce que** le contour convexe (3) a une courbure ayant un rayon au niveau du point de contact (6) entre la seconde surface (12) au sein de l'ouverture (1) et l'élément de raccordement (30) dans la plage de 10 mm à 1 000 mm, de préférence dans la plage de 40 mm à 100 mm.

3. Cloche de disque de frein (10) selon la revendication 1 ou 2, **caractérisée en ce que** les ouvertures (1) comprennent des alésages, des trous allongés ou des rainures (1'),
dans laquelle la cloche (10) comprend une aire de surface circonférentielle extérieure qui est définie par la circonférence extérieure (14) et l'épaisseur (13) de la cloche (10) en direction axiale au niveau du bord circonférentiel extérieur (15) de la cloche,
et dans laquelle les rainures (1') sont positionnées au niveau de l'aire de surface circonférentielle extérieure passant à travers au moins une partie de l'épaisseur (13) de la cloche (10) en direction axiale.

4. Cloche de disque de frein (10) selon la revendication 3, **caractérisée en ce que** les ouvertures (1) comprennent les rainures (1').

5. Cloche de disque de frein (10) selon la revendication 4, **caractérisée en ce que** les rainures (1') passent à travers toute l'épaisseur (13) de la cloche (10) en direction axiale.

6. Cloche de disque de frein (10) selon l'une quelconque des revendications précédentes, **caractérisée en ce que** le contour convexe (3) s'étale sur la profondeur totale des ouvertures (1).
